(19) Europäisches Patentamt

European Patent Office

Office européen des brevets

(11) Veröffentlichungsnummer: **0 289 750 B1**

# (12) EUROPÄISCHE PATENTSCHRIFT

(45) Veröffentlichungstag der Patentschrift:
24.07.91 Patentblatt 91/30

(21) Anmeldenummer: 88104027.3

(22) Anmeldetag: 14.03.88

(51) Int. Cl.⁵: **H04R 25/02**

(54) Verfahren und Vorrichtung zur Herstellung einer Otoplastik.

(30) Priorität: 06.05.87 DE 3715082

(43) Veröffentlichungstag der Anmeldung:
09.11.88 Patentblatt 88/45

(45) Bekanntmachung des Hinweises auf die
Patenterteilung:
24.07.91 Patentblatt 91/30

(84) Benannte Vertragsstaaten:
AT CH DE FR GB IT LI NL

(56) Entgegenhaltungen:
FR-A- 1 552 471
GB-A- 2 084 072
US-A- 3 602 654
NEUES AUS DER TECHNIK, Nr. 2, 15. Mai 1986,
Seiten 2-3, Würzburg, DE: "Verfahren zum
Herstellen eines Ohrstückes für ein Hörgerat"
HEARING INSTRUMENTS, Band 35, Nr. 1, Januar 1984, Seiten 12-16, Duluth, Minnesota,
US; B. VOROBA: "A tool for the optimization of
hearing aid fittings"

(73) Patentinhaber: Siemens Aktiengesellschaft
Wittelsbacherplatz 2
W-8000 München 2 (DE)

(72) Erfinder: Lebisch, Helmut, Dipl.-Ing.
Ziegelgasse 27
W-8520 Erlangen (DE)
Erfinder: Basel, Rainer, Dipl.-Ing.
Schallershofer Strasse 14
W-8520 Erlangen (DE)
Erfinder: Fuchs, Georg
Rapsdorf 5
W-8551 Hemhofen (DE)
Erfinder: Hermann, Dietmar
Burgambach 26
W-8533 Scheinfeld (DE)
Erfinder: Wipfelder, Ernst, Dr.
Neumarkter Strasse 84a
W-8000 München 80 (DE)
Erfinder: Hekele, Wilhelm, Dipl.-Ing.
Josef-Koch-Strasse 5
W-8208 Kolbermoos (DE)

## Beschreibung

Die Erfindung bezieht sich auf Verfahren zur Herstellung einer Otoplastik gemäß Oberbegriffe der Patentansprüche 1, 13 und 19. Sie bezieht sich ebenfalls auf Vorrichtungen zur Durchführung solcher Verfahren.

Bei den üblichen Herstellungsverfahren von Otoplastiken wird zuerst ein Abdruck vom Gehörgang des zu versorgenden Ohres des Hörgeschädigten genommen. Mittels des Abdrucks wird ein Negativ geformt. Erst dann kann daraus eine Otoplastik hergestellt werden, die der Form nach dem Gehörgang des Ohres angepaßt ist. Unter Umständen muß nach der Herstellung die Otoplastik noch beschnitten oder geschliffen werden, um Gußfehler zu beseitigen. Da dieser Vorgang teuer und zeitaufwendig ist, bemühen sich Hersteller schon seit längerem, ein Verfahren zu entwikkeln, womit das Herstellen eines Abdruckes und eines Negatives vermieden werden kann.

So beschreibt z.B. die DE-AS1231304 ein Verfahren, wonach ein selbsthärtender Kunststoff auf einem die Grundform des Gehörganges des menschlichen Ohres nachbildenden Grundkörper verteilt und der beschichtete Grundkörper danach so lange direkt in den Gehörgang des Ohres des Hörgeschädigten eingesetzt wird, bis der jetzt an die Innenkontur des Gehörgangs angepaßte Kunststoff ausgehärtet ist.

Dieses Verfahren ist jedoch mit mehreren Nachteilen verbunden. Erstens ist es für den Hörgeschädigten relativ gefährlich, eine pastenartige Masse direkt im Ohr zu haben, da sich ein Teil der Masse vom Grundkörper lösen und zu weit in den Gehörgang gedrückt werden kann. Zweitens ist der Härteprozeß des Kunststoffes mit einer Wärmeentwicklung verbunden, die für das ungeschützte Ohr unangenehm sein kann. Außerdem beschreibt diese Schrift eine Ausführungsform, bei der sich der Kunststoff chemisch mit dem Grundkörper verbindet, was wiederum für das ungeschützte Ohr gefährlich ist. Schließlich wird bei diesem Verfahren eine Mehrzahl an Standard-Grundkörpern benötigt, da die Kunststoff-Beschichtung nicht ausreicht, um sich an die Vielzahl der Gehörgangsformen ausreichend anzupassen.

Der Artikel "A Tool for the Optimization of Hearing Aid Fittings" von Dr. Barry Voroba, veröffentlicht in "Hearing Instruments", Band 35, Nr. 1, Januar 1984, Seiten 12 bis 14 und 16, und die GB-A 2 084 072 beschreiben ebenfalls Verfahren, wonach ein Kunststoff direkt in den Gehörgang des Ohres gefügt wird. In diesen Fällen werden weiche Plastikmaterialien in das Ohr injiziert. Passende Stempel werden dann in die Masse gedrückt, bevor sie aushärtet. Nach Aushärten werden Masse und Stempel aus dem Gehörgang des Ohres entfernt. Die Stempel werden daraufhin aus den Massen herausgenommen und es verbleiben Gehäuseschalen für In-dem-Ohr-Hörgeräte. Diese Verfahren weisen jedoch ebenfalls die meisten der Nachteile der obengenannten DE-AS 12 31 304 auf. Zum Beispiel ist auch hier die weiche Masse direkt mit dem Gehörgang des Ohres in Berührung und der Härteprozess findet im ungeschützten Gehörgang statt. Außerdem werden wieder eine Mehrzahl an Standard-Grundkörpern benötigt, was zusätzliche Kosten und Umstände verursacht.

Die DE-AS 24 59 259 beschreibt eine weitere Möglichkeit, ein Ohrpaßstück ohne Verwendung eines Abdruckes oder Negativs herzustellen. Anstelle einer Otoplastik wird der Schallkanal des Hörgerätes mittels einer umschließenden, mit Flüssigkeit gefüllten Tasche im Gehörgang gehalten. Die Tasche paßt sich an die Form des Gehörgangs an, indem ein Anpreßring gegen die Tasche gedrückt wird. Nachteilig bei dieser Lösung ist jedoch, daß die Flüssigkeit in der Tasche nicht aushärtet. Es besteht also immer die Gefahr, daß die Tasche reißt und die Flüssigkeit ausläuft. Eine ähnliche Vorrichtung, die eine mit Flüssigkeit gefüllte Tasche umfaßt, ist in der US-PS 3,602,654 beschrieben.

Die FR-A 1 552 471 beschreibt einen mit aushärtbarer Formmasse gefüllten Beutel, der nach Aushärten der Formmasse als Otoplastik verwendet wird. Der beschriebene Gegenstand unterscheidet sich von vorliegender Erfindung dadurch, daß das In-dem-Ohr-Hörgerätmodul an die ausgehärtete Otoplastik angesteckt wird und deshalb nach Positionieren des Gerätes im Ohr aus diesem herausragt. Ein Hörgerät gemäß vorliegender Erfindung ist statt dessen in der Otoplastik eingebettet.

Außerdem, da der Beutel ein konstantes Volumen aufweist, läßt er sich weniger gut an verschiedenartige Gehörgangsformen anpassen. Da im Gegensatz zu vorliegendem Herstellungverfahren kein axialer Druck auf die Gehörgangswände bei der Anpassung ausgeübt wird, bildet der Beutel nicht so gut die Gehörgangsform nach. Um genügend Halt im Ohr zu erzeugen, sitzt die Otoplastik der FR-A 1 552 471 nicht nur im Gehörgang, sondern auch in der Muschel des äußeren Ohres. Der Gegenstand der FR-A 1 552 471 (= DE-OS 1 616 152) ist in dem Aufsatz "Verfahren zum Herstellen eines Ohrstückes für ein Hörgerät" in "Neues aus der Technik", Nr. 2, 15.05.1986, Seite 2, Würzburg, BRD, zusammengefaßt.

Aufgabe vorliegender Erfindung ist es, ein Verfahren und eine Vorrichtung zur In-dem-Ohr-Herstellung einer Otoplastik ohne Abdruck und Negativ sowie unter Vermeidung der Nachteile der zuvor beschriebenen Verfahren und Vorrichtungen anzugeben. Es ist außerdem Aufgabe vorliegender Erfindung, ein vereinfachtes Verfahren zur In-dem-Ohr-Herstellung einer Otoplastik unter Verwendung von serienmäßig vorgefertigten Teilen anzugeben, das auch von relativ ungeübten Personen durchführbar ist.

Die Aufgabe der Erfindung wird mit den kennzeichnenden Merkmalen der Verfahren der Ansprüche 1, 13,

EP 0 289 750 B1

19 gelöst. Sie wird ebenfalls gelöst durch Vorrichtungen nach den Ansprüchen 5, 11, 16 oder 21 durch Durchführung solcher Verfahren.

Durch Verwendung einer Hülle, die über einen Stempel oder eine Schale gespannt wird und in die flüssiges Otoplastik-Material eingeführt wird, kommt das Innenohr des Patienten mit dem Otoplastik-Material nicht in Berührung. Der Gehörgang ist daher vor Wärmeentwicklung und chemischen Vorgängen sowie vor der Otoplastik-Masse selbst geschützt. Bei vorteilhafter Verwendung einer Hülle nach Unteranspruch 29, die also extrem sowie leicht dehnbar ist, können Otoplastiken hergestellt werden, die sich trotz Verwendung lediglich einer Standard-Grundkörperart ohne weiteres an die Vielfalt der Gehörgangsformen anpassen. Da in die Hülle ein Otoplastik-Material, das in wenigen Minuten aushärtet, eingeführt wird, besteht auch keine Gefahr, daß dem Ohr durch ständig flüssigem Material geschadet wird.

Das erfindungsgemäße Verfahren ist sowohl für In-dem-Ohr-Geräte wie auch für Hinter-dem-Ohr-Hörgeräte geeignet.

Weitere Vorteile und Einzelheiten der Erfindung ergeben sich aus der nachfolgenden Beschreibung von vier Ausführungsbeispielen anhand der Zeichnung und in Verbindung mit den Unteransprüchen.

Es zeigen :

Fig. 1    einen Stempelhalter, eine Entlüftungsplatte, einen Stempel, eine Überschale und eine Hülle, die im zusammengesetzten Zustand zur Herstellung einer Otoplastik gemäß der Erfindung eingesetzt werden, in einer Explosionsdarstellung,

Fig. 2    die Bauteile der Fig. 1 im zusammengebauten Zustand, mit eingeführtem Otoplastik-Material, im Längsschnitt,

Fig. 3    eine weitere Vorrichtung zur Herstellung einer Otoplastik gemäß der Erfindung unter Verwendung einer mit Löchern ausgebildeten Überschale und einer zweiten Hülle, in Explosionsdarstellung,

Fig. 4    und 5 die Komponenten der Figur 3 im zusammengebauten Zustand mit Otoplastik-Material, im Längsschnitt,

Fig. 6    und 7 eine Vorrichtung mit einer doppelwandigen Hülle zur Herstellung einer Otoplastik gemäß eines dritten erfindungsgemäßen Verfahrens, im Längsschnitt,

Fig. 8    einen Aufbau einer vierten erfindungsgemäßen Vorrichtung zur Herstellung einer Otoplastik, in Explosionsdarstellung, und

Fig. 9    die Bauteile der Figur 8 im zusammengebauten Zustand mit eingeführtem Otoplastik-Material, im Längsschnitt.

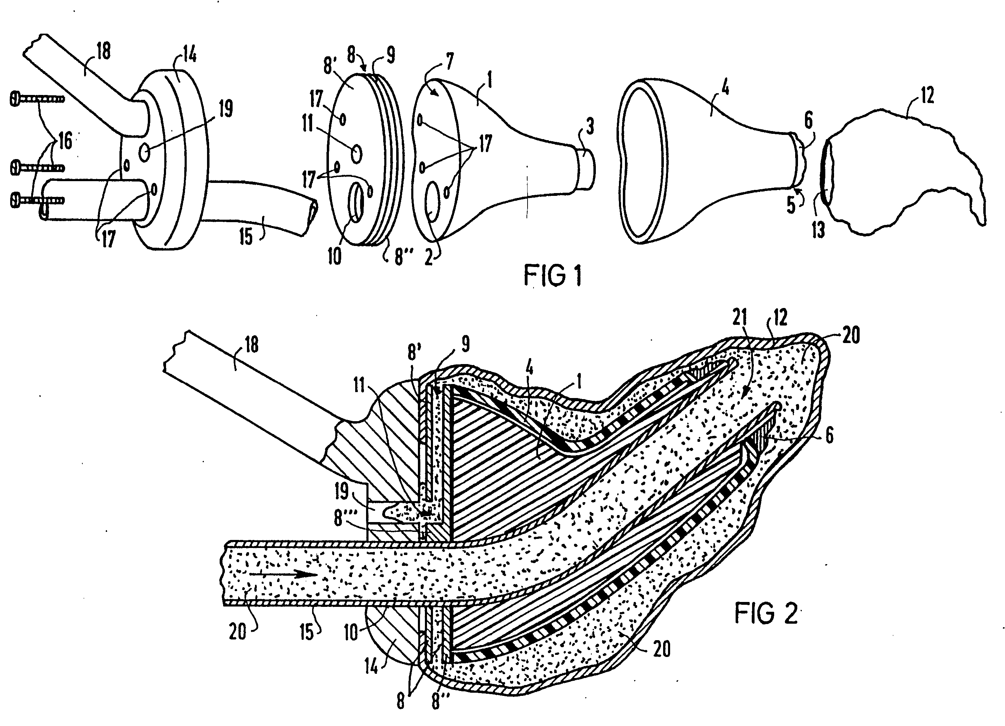

Die Figur 1 zeigt einen Stempel 1, dessen Außenkontur im wesentlichen die Grundform eines menschlichen Gehörganges nachbildet. Längs durch den Stempel 1 läuft ein Kanal 2, durch den bei der Herstellung der Otoplastik das Otoplastik-Material eingeführt wird. Am proximalen Ende des Stempels 1, d.h. an dem Ende, das während der Herstellung am weitesten in den Gehörgang des Ohres ragt, ist der Kanal 2 durch einen hohlen Stutzen 3 etwas verlängert.

Zuerst wird der Stempel 1 in eine Überschale 4 gesteckt, die ebenfalls der Grundform des menschlichen Ohres angepaßt ist. Stempel 1 und Überschale 4 schließen am distalen Ende bündig ab. Die Überschale 4 weist am proximalen Ende ein Loch 5 für den Stutzen 3 auf.

Nachdem der Stempel 1 in der Überschale steckt, so daß der Stutzen 3 aus der Überschale 4 hervorragt, wird eine Harzmasse 6 an den Stutzen 3 gedrückt, damit der Spalt zwischen Stutzen 3 und Überschale 4 abgedichtet ist. Somit kann das fließende Otoplastik-Material bei der Herstellung der Otoplastik nicht zwischen Stempel 1 und Überschale 4 gelangen. Außerdem, wenn sich die Masse allmählich bis zur Spitze des Stutzens 3 verjüngt (siehe hierzu Fig. 2), wird vermieden, daß sich Luftbläschen in Vertiefungen an dieser Stelle bilden.

In einem weiteren Schritt wird auf der flachen Stempelfläche 7 am distalen Ende eine Entlüftungsplatte 8 angebracht. Die Platte 8 ist mindestens im Durchmesser so breit wie die Überschale 4 an ihrer breitesten Stelle und dichtet die Kombination aus Stempel 1 und Überschale 4 an diesem Ende ab. Die Entlüftungsplatte 8 besteht vorzugsweise aus zwei Scheiben 8', 8", die in einem Abstand (Zwischenraum 9) parallel zueinander angeordnet und über ein Verbindungsstück 8''' (ähnlich wie bei einem Jojo) miteinander verbunden sind. Eine erste Bohrung 10 durch die Platte 8 ist derart positioniert, daß sie nach der Montage mit dem Kanal 2 im Stempel 1 übereinstimmt. Eine weitere Bohrung 11 verläuft lediglich durch die Scheibe 8' der Platte 8 und bildet eine Entlüftungsöffnung für den Raum zwischen den Scheiben 8', 8". Durch diese Öffnung 11 kann, bei der Herstellung der Otoplastik, die vom Otoplastik-Material verdrängte Luft bzw. auch überschüssiges Otoplastik-Material austreten.

Dann wird eine elastische Hülle 12 über die Einrichtung aus Stempel 1, Überschale 4 und Entlüftungsplatte 8 gezogen. Diese Hülle 12 kann z.B. aus einem synthetischen Kautschuk gefertigt sein. Wandstärken der Hülle zwischen 25 μm und 0,2 mm sind besonders geeignet, da die Hülle extrem sowie leicht dehnbar sein soll, ohne

3

aber zu reißen. Die Öffnung 13 der Hülle 12 zieht sich nach dem Überspannen etwas zusammen. Der Hüllenrand an der Öffnung 13 ist also über die Stirnfläche der Scheibe 8' der Entlüftungsplatte 8 gestülpt und die Hülle 12 kann sich somit nicht von selbst von der Einrichtung aus Stempel 1, Überschale 4 und Platte 8 lösen.

Als letzter Schritt des Zusammenfügens wird ein Stempelhalter 14 auf die distale Seite geschraubt. Der Stempelhalter 14 umfaßt einen Schlauch 15, der beim Montieren durch die Bohrung 10 der Entlüftungsplatte 8 in den Einführkanal 2 des Stempels 1 eingeschoben wird. Der Schlauch 15 dient zum Einführen von Otoplastik-Material. Über den Stempelhalter 14 wird die Entlüftungsplatte 8 am Stempel 1 festgeschraubt und die Hülle 12 am übergestülpten Rand zwischen Entlüftungsplatte 8 und Stempelhalter 14 festgeklemmt. Zum Anschrauben dienen Schrauben 16, die in Schraubenlöcher 17 passen. Der Stempelhalter 14 ist außerdem mit einem Stiel 18 versehen, der die Positionierung der Vorrichtung im Gehörgang des Ohres des Hörgeschädigten erleichtert. Die Öffnung 19 im Stempelhalter 14 stimmt nach Montage mit der Bohrung 11 in der Entlüftungsplatte 8 überein. Sie ist also ein Austritt für die verdrängte Luft zwischen Überschale 4 und Hülle 12 bei der Herstellung der Otoplastik.

In einer Variante dieser Vorrichtung könnte der Schlauch 15 auf der Einspritzseite des Stempelhalters für das Otoplastik-Material starr ausgebildet werden. Das starre Schlauchteil kann dann gleichzeitig als Positionierhilfe dienen und der Stiel 18 würde dadurch entfallen.

Die Bestandteile der Vorrichtung sind alle serienmäßig vorgefertigte Teile. Kein Teil muß speziell angefertigt werden. Sie können alle universal eingesetzt werden. Dadurch werden erhebliche Kosten gespart.

Die Figur 2 zeigt einen Schnitt durch die Vorrichtung der Figur 1 im zusammengesetzten Zustand. Die Vorrichtung 1-19 wird in den Hörkanal des zu versorgenden Ohres eines Hörgeschädigten eingeführt und mittels Stiel 18 positioniert. Beim Einsetzen der Vorrichtung in das Ohr befindet sich noch kein Otoplastik-Material zwischen Überschale 4 und Hülle 12. Dort ist lediglich etwas Luft eingeschlossen. Nachdem die Vorrichtung jedoch korrekt positioniert ist, wird fließendes Otoplastik-Material 20 vom distalen Ende des Schlauches 15 her eingepreßt, z.B. mit einer Spritze (nicht abgebildet). Hierdurch wird die verbleibende Luft zwischen Überschale 4 und Hülle 12 langsam durch den Zwischenraum 9 und die Bohrung 11 der Entlüftungsplatte 8 und schließlich durch die Entlüftungsöffnung 19 des Stempelhalters 14 verdrängt. Die Hülle 12 dehnt sich, je mehr Otoplastik-Material eindringt, bis sie an die Gehörgangswände des Ohres stößt. Auf diese Weise nimmt die Otoplastik sehr exakt die Form des Gehörganges an. Die Hülle 12 ist komplett mit Otoplastik-Material 20 ausgefüllt, sobald das Otoplastik-Material 20 aus der Entlüftungsöffnung 19 hervortritt. Die Zufuhr von weiterem Otoplastik-Material 20 kann abgebrochen werden.

Das Otoplastik-Material 20, z.B. ein Polymer auf Acrylbasis, härtet in wenigen Minuten aus. Der Härteprozeß kann beschleunigt werden, indem dem Otoplastik-Material vor Beginn des Herstellungsverfahrens ein Fotoinitiator beigefügt wird. Ein solcher Fotoinitiator leitet den Härteprozeß ein, wenn das Material Licht ausgesetzt wird. Für diesen Fall könnten Stempelhalter 14, Entlüftungsplatte 8, Überschale 4 und Stempel 1 vorzugsweise aus transparentem Material gefertigt werden. Als Material hat sich Plexiglas als vorteilhaft für die Überschale 4 und die Entlüftungsplatte 8 erwiesen und Polyoxymethylen ist für den Stempelhalter 14 besonders gut geeignet. Nach Aushärten des Otoplastik-Materials wird die Vorrichtung aus dem Gehörgang herausgenommen und gegebenenfalls einem weiteren Härteprozeß ausgesetzt. Die Schrauben 16 werden dann gelöst und der Stempelhalter 14 samt Schlauch 15 entfernt. Entlüftungsplatte 8 und Stempel 1 werden außerdem aus der Otoplastik herausgenommen. Der proximale Stutzen wird dann abgetrennt, um die Schallableitungsöffnung 21 freizulegen. Es können daraufhin die nötigen elektrischen und elektromechanischen Bauteile in die Otoplastik eingebaut werden, um entweder ein In-dem-Ohr- oder Hinter-dem-Ohr-Hörgerät fertigzustellen.

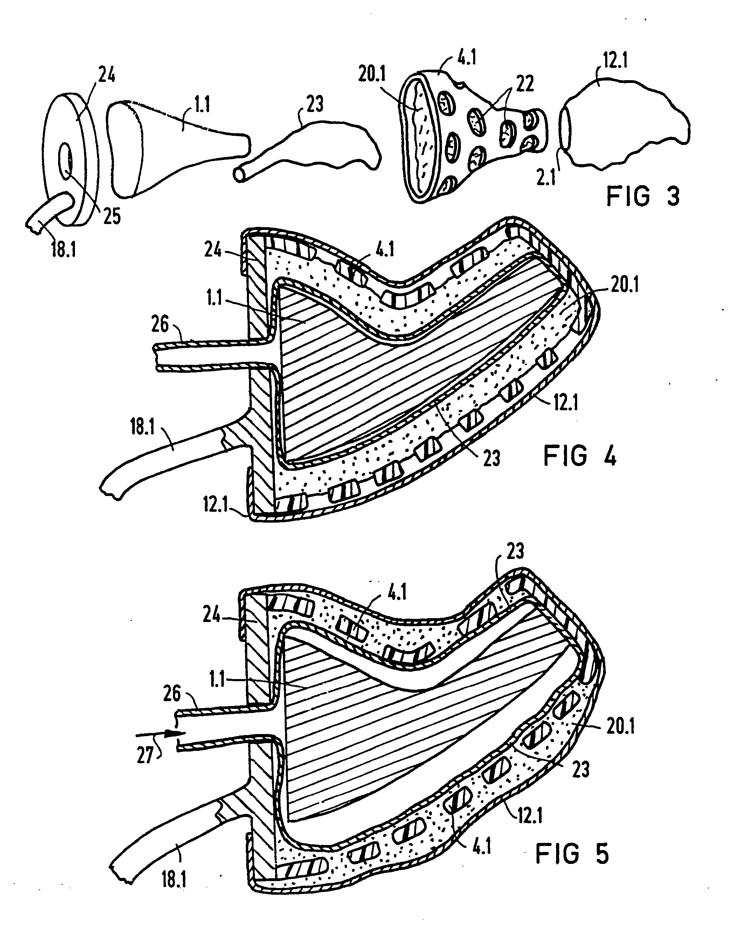

In den Figuren 3 bis 5 ist eine Variante des beschriebenen Verfahrens dargestellt. Besonders vorteilhaft bei dieser Ausführungsmöglichkeit ist der Transport des Otoplastik-Materials durch Öffnungen in der Überschale, der senkrecht zur Wand des Gehörgangs erfolgt. Die mit Otoplastik-Material gefüllte Hülle paßt sich insbesondere besser an solche Gehörgangskanäle, die Hinterschneidungen haben, an.

Die Figur 3 zeigt in Explosionsdarstellung eine Vorrichtung zur Durchführung dieser Verfahrensvariante. Im Gegensatz zum ersten Ausführungsbeispiel weist die Überschale 4.1 eine Mehrzahl an Löchern 22 auf. Die Überschale 4.1 kann mit beliebig vielen Löchern 22 versehen sein. Auch die Form und Größe der einzelnen Löcher 22 kann beliebig gewählt werden, solange das Otoplastik-Material 20.1 durch die Löcher 22 gepreßt werden kann. Am sachdienlichsten ist jedoch eine Überschale, die einen leichten und gleichmäßigen Transport des Otoplastik-Materials ermöglicht. Im Extremfall könnte die Überschale siebartig ausgebildet sein.

Außerdem wird zusätzlich zur Hülle 12.1 eine zweite Hülle 23 beim Verfahren verwendet. Zuerst wird die erste Hülle 12.1 über die Überschale 4.1 und die zweite Hülle 23 über den Stempel 1.1 gezogen. Otoplastik-Material 20.1 wird daraufhin ggfs. mittels eines Einführkanals 2.1 (welches auch die Öffnung der Hülle 12.1 sein kann) in der Überschale 4.1 gleichmäßig verteilt. Stempel 1.1 samt Hülle 23 werden dann ebenfalls in der Überschale positioniert. Der Stempel 1.1 ist kleiner als der im vorherigen Ausführungsbeispiel verwendete Stempel 1. Das Otoplastik-Material 20.1 wird daher beim Einfügen des Stempels 1.1 kaum durch die Löcher 22 verdrängt (s. Figur 4).

Als letzter Schritt des Zusammenbaus wird eine Halterungsplatte 24 zur Halterung der Vorrichtung an der Überschale 4.1 z.B. durch Klebstoff befestigt. Das offene Ende der Hülle 23 wird zuvor durch eine Öffnung 25 in der Halterungsplatte 24 gezogen. Ein Stiel 18.1 an der Halterungsplatte 24 erleichtert die Positionierung der Vorrichtung im Ohr des Hörgeschädigten.

Die Figur 4 zeigt einen Schnitt durch die Vorrichtung der Figur 3 in zusammengesetzten Zustand. Die Vorrichtung wird entsprechend dem ersten Ausführungsbeispiel in den Hörkanal des zu versorgenden Ohres eines Hörgeschädigten eingeführt und mittels Stiel 18.1 positioniert. Das Otoplastik-Material 20.1 befindet sich zu diesem Zeitpunkt noch in einem ersten Bereich zwischen Überschale 4.1 und Hülle 23. Nach der Positionierung wird jedoch die Hülle 23 aufgeblasen, wodurch das Otoplastik-Material 20.1 aus dem ersten Bereich verdrängt wird. Das Otoplastik-Material 20.1 verlagert sich daraufhin in einen zweiten Bereich zwischen der Hülle 12.1 und der Überschale 4.1, indem es durch die Löcher 22 der Überschale 4.1 hinausfließt. Die Hülle 23 wird über ihre Öffnung 26 aufgeblasen. Zum Aufblasen der Hülle 23 wird ein Füll-Medium, z.B. Luft, verwendet. Die Einfuhr des Füll-Mediums ist mit dem Pfeil 27 in der Figur 5 angedeutet. Die Hülle 23 verdrängt so lange das Otoplastik-Material 20.1, bis sich die Hülle 12.1 an die Form des Hörkanales des Hörgeschädigten angepaßt hat und der Zwischenraum zwischen der Überschale 4.1 und der Hülle 12.1 komplett mit Otoplastik-Material 20.1 gefüllt ist. Der durch die Hülle 23 hervorgerufene Druck auf das Otoplastik-Material 20.1 wird so lange beibehalten, bis das Otoplastik-Material 20.1 ausgehärtet ist. Nach Aushärten des Otoplastik-Materials wird die Vorrichtung aus dem Ohr des Hörgeschädigten entfernt. Die Halterungplatte 24 wird von der Vorrichtung abgetrennt, damit der Stempel 1.1 und die Hülle 23 aus der Überschale 4.1 herausgenommen werden können. Falls sich noch Otoplastik-Material 20.1 in dem ersten Bereich befindet, wird dieses aus der Überschale 4.1 herausgetrennt.

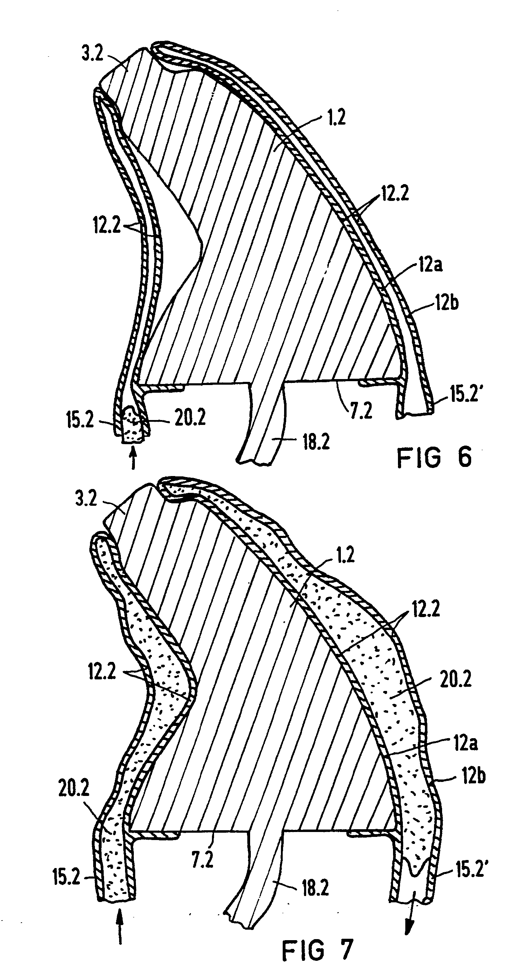

Die Figuren 6 und 7 zeigen ein drittes Ausführungsbeispiel. Hier wird auf eine Überschale sowie eine Halterungsplatte verzichtet. Stattdessen ist die elastische Hülle doppelwandig ausgebildet, damit das Otoplastik-Material zwischen die beiden Schichten der Hülle eingegeben werden kann. Die Herstellung derartiger Hüllen kann entsprechend dem Herstellungsverfahren von doppelwandigen Handschuhen durchgeführt werden. Ein solches Verfahren ist z.B. in der DE-OS 32 06 402 erläutert.

Die Figur 6 zeigt einen Schnitt durch eine gemäß des dritten Ausführungsbeispieles aufgebaute Vorrichtung. Stempel 1.2 umfaßt einen Stutzen 3.2 und einen Stiel 18.2 und ist von einer elastischen doppelwandigen Hülle 12.2 umspannt. Diese Hülle 12.2 greift am proximalen Ende des Stempels 1.2 um den Stutzen 3.2 und am distalen Ende über die flache Stempelfläche 7.2. Zwei als Teil der Hülle 12.2 ausgebildete Schläuche 15.2 und 15.2' befinden sich auch am distalen Ende des Stempels 1.2. Der Schlauch 15.2 ist der Eintrittsschlauch für das Otoplastik-Material 20.2. Der Schlauch 15.2' ist dahingegen der Austritt des Otoplastik-Materials 20.2.

Eine Anordnung mit genau zwei Schläuchen ist jedoch nicht unbedingt erforderlich. Es können nach Belieben auch mehr Eintritts-und Austrittsschläuche angeordnet werden. Es ist auch z.B. möglich, die Hülle 12.2 mit lediglich einem Schlauch auszubilden. In diesem Fall sollte die Hülle evakuiert werden, bevor das Otoplastik-Material zugeführt wird, womit die Notwendigkeit eines Austrittschlauches entfällt. Der Stempel 1.2 kann z.B. auch durch eine Schale ersetzt werden.

In einer vorteilhaften Ausführung weist die Hülle 12.2 verschiedene Wandstärken auf. Die Innenschicht 12a und die Schläuche 15.2, 15.2' haben eine dickere Wandstärke als die Außenschicht 12b, die etwa 0,1 mm dick ist. Die Schläuche 15.2 und 15.2' werden verdickt, damit sie sich nicht anstelle der Hülle 12.2 bei der Zufuhr von Otoplastik-Material 20.2 dehnen. Eine Wandstärke von 0,3 bis 0,5 mm ist z.b. durch mehrmaliges Nachtauchen der Schläuche während der Herstellung der Hülle 12.2 erzielbar. Eine leichte Verdickung der Innenschicht 12a der Hülle 12.2 ergibt einen kleinen Entlüftungsspalt in der fertigen Otoplastik nach dem Einbau des Hörgerätmoduls (nicht gezeigt).

Die Figur 7 zeigt die Vorrichtung, nachdem das Otoplastik-Material 20.2 bereits zwischen die Wände 12a und 12b der Hülle 12.2 eingeführt worden ist. Die Außenschicht 12b der Hülle ist an die Form des Hörkanales des Hörgeschädigten angepaßt. Die Innenschicht 12a der Hülle hat sich an den Stempel 1.2 angelegt. Nachdem der Zwischenraum zwischen den Wänden 12a und 12b der Hülle 12.2 komplett mit Otoplastik-Material 20.2 gefüllt ist, wird das überflüssige Otoplastik-Material 20.2 in den Austrittsschlauch 15.2' gepreßt. Nach Aushärten des Otoplastik-Materials 20.2 im Hörkanal wird die Vorrichtung aus dem Ohr herausgenommen. Die Nachbearbeitung dieser Otoplastik ist besonders einfach. Nach Entfernen des Stempels 1.2 wird lediglich die Hülle 12.2 von dem harten Otoplastik-Material 20.2 abgezogen und das distale Ende der Otoplastik glatt geschliffen. Ein Schallaustritt am proximalen Ende der Otoplastik muß nicht gebohrt werden, da der Stutzen 3.2 bereits bei der Herstellung der Otoplastik eine entsprechende Öffnung geschaffen hat.

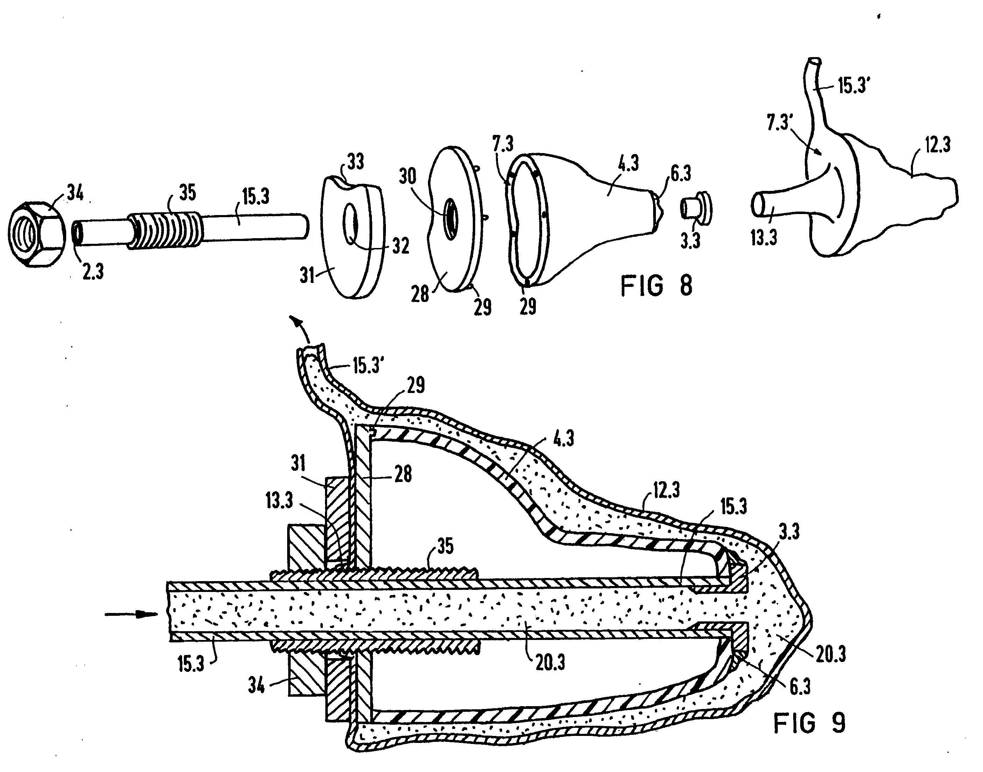

In den Figuren 8 und 9 ist eine dritte, besonders vorteilhafte Vorrichtung zur Durchführung des erfindungsgemäßen Verfahrens gezeigt. Die Figur 8 zeigt in Explosionsdarstellung die einzelnen Komponenten der Vorrichtung. Eine Schale 4.3 hat im wesentlichen die Grundform eines menschlichen Gehörganges und bildet mit ihrer Innenkontur die Außenkontur eines In-dem-Ohr-Hörgerätmoduls nach. Am proximalen Ende umfaßt die Schale 4.3 eine Öffnung, in die ein durchbohrter Stutzen 3.3 mit etwas Spielraum paßt. Eine Abdeckplatte 28 mit Schnappverbindungen 29 und einem Gewindeloch 30 ist als Deckel für die Überschale 4.3 am distalen Ende vorgesehen.

Eine elastische Hülle 12.3, die die gleiche Außenkontur wie die Überschale hat, umfaßt an ihrem distalen Ende 7.3' eine erste schmale, zentrierte, rohrförmige Öffnung 13.3 und einen Schlauchansatz 15.3'. Zur Halterung der Hülle 12.3 während des Herstellungsverfahrens wird eine Klemmplatte 31 mit einer Bohrung 32 und einer Aussparung 33 eingesetzt. Dieser wird mittels einer Mutter 34, die auf eine durchbohrte Schraube 35 geschraubt wird, an die Vorrichtung befestigt. Durch das Bohrloch der durchbohrten Schraube 35 verläuft ein zumindest teilweise starr ausgebildeter Schlauch 15.3. Der Schlauch 15.3, dessen Einführkanal 2.3 das Otoplastik-Material 20.3 in die Vorrichtung leitet, ist am proximalen Ende an der Überschale 4.3 und am durchbohrten Stutzen 3.3 befestigt.

Als erster Schritt des Zusammenbaus der Vorrichtung wird der durchbohrte Stutzen 3.3 an der Überschale 4.3 befestigt. Der Schlauch 15.3 wird dann auf den Stutzen 3.3 gesteckt und befestigt, damit beim Herstellungsverfahren der Otoplastik das Otoplastik-Material 20.3 durch die Schale 4.3 und durch den durchbohrten Stutzen 3.3 geleitet wird. Das gegenüberliegende, distale Ende des Schlauches 15.3 wird durch das Gewindeloch 30 der Abdeckplatte 28 gesteckt und die Abdeckplatte zum distalen Ende 7.3 der Schale 4.3 geführt. Steckverbindungen 29 an der Abdeckplatte 28 und der Schale 4.3 sind dazu angeordnet, diese beiden Komponenten lösbar zu verbinden. Die Verbindung könnte jedoch z.B. auch als Klebeverbindung oder Sollbruchstelle ausgebildet werden. Als nächster Schritt wird die durchbohrte Schraube 35 über den Schlauch gefädelt und in das Gewinde 30 der Abdeckplatte 28 geschraubt. Zur Abdichtung des proximalen Endes der Überschale wird, falls erforderlich, eine Harzmasse 6.3 in den Spalt zwischen Stutzen 3.3 und Schale 4.3 gepreßt.

Die Einrichtung aus Hülle 4.3, Stutzen 3.3, Abdeckplatte 28, Schlauch 15.3 und Schraube 35 muß als nächster Schritt in die Hülle 12.3 gebracht werden. Da die Öffnung 13.3 der Hülle 12.3 viel kleiner ist als die Einrichtung, wird eine Dreidornzange (nicht gezeigt) verwendet, um die Öffnung 13.3 auszudehnen. Nachdem die Einrichtung in der Hülle 12.3 positioniert worden ist, wird die Dreidornzange entfernt. Die Hülle 12.3 zieht sich elastisch an die Schale 4.3. Damit sich die Hülle 12.3 während der Herstellung der Otoplastik nicht verzieht, wird das distale Ende 7.3' der Hülle 12.3 zwischen einer Klemmplatte 31 und der Abdeckplatte 28 eingeklemmt. Eine Öffnung 32 in der Klemmplatte 31, durch die der Schlauch 15.3 geführt wird, hat einen etwas größeren Durchmesser als die durchbohrte Schraube 35. Falls die rohrförmige Öffnung 13.3 der elastischen Hülle 12.3 durch die Öffnung 32 der Klemmplatte 31 hinausragt, wird diese dann so abgetrennt, daß sie mit der distalen Fläche der Klemmplatte 31 endet. Eine Mutter 34 wird auf das aus der Einrichtung distal herausragende Ende der durchbohrten Schraube 35 zur Halterung der Klemmplatte 31 geschraubt.

Da der Schlauch 15.3 vorzugsweise zumindest im distalen Bereich starr ausgebildet ist, kann dieser zur Positionierung der Einrichtung im Gehörgang des Gehörgeschädigten verwendet werden. Nach der Positionierung wird das Otoplastik-Material 20.3, wie bereits anhand des ersten Ausführungsbeispiels beschrieben, über den Schlauch 15.3 in die Einrichtung geführt. Nachdem sich die Hülle 12.3 an die Form des Hörkanales angepaßt hat und der Zwischenraum zwischen Schale 4.3 und Hülle 12.3 komplett mit Otoplastik-Material 20.3 gefüllt ist, tritt das überflüssige Otoplastik-Material aus dem Entlüftungsschlauch 15.3' der Hülle 12.3.

Nach Aushärten des Otoplastik-Materials 20.3 wird die Einrichtung wieder auseinander genommen und die Hülle 12.3 von dem Otoplastik-Material 20.3 abgezogen. In die Schale 4.3 der fertiggestellten Otoplastik kann entweder ein In-dem-Ohr-Hörgerätmodul oder ein Steckermodul für ein Hinter-dem-Ohr-Hörgerät eingebaut werden.

## Patentansprüche

1. Verfahren zur Herstellung einer Otoplastik, unter Verwendung eines Stempels (1, 1.1) und eines fließenden Otoplastik-Materials (20, 20.1), **gekennzeichnet durch** die folgenden Verfahrensschritte :

a) auf den die Außenkontur eines In-dem-Ohr-Hörgerätmoduls nachbildenden Stempel (1 ; 1.1) wird eine verformbare Hülle (12 ; 12.1) gezogen,

b) die Einrichtung aus Stempel (1 ; 1.1) und Hülle (12 ; 12.1) wird in den Hörkanal des zu versorgenden Ohres eines Hörgeschädigten eingeführt und positioniert,

c) das fließende Otoplastik-Material (20 ; 20.1) wird in die Einrichtung (1, 12 ; 1.1, 12.1) über einen Einführkanal (2 ; 2.1) zwischen Stempel (1 ; 1.1) und Hülle (12 ; 12.1) eingeführt, z.B. gepreßt, bis sich die Hülle an die Form des Hörkanales des Ohres angepaßt hat und der Zwischenraum zwischen Stempel und Hülle komplett mit Otoplastik-Material (20 ; 20.1) gefüllt ist,

d) nach Aushärten des Otoplastik-Materials (20 ; 20.1) wird die Einrichtung aus dem Ohr des Patienten herausgenommen, und

e) der Stempel (1 ; 1.1) wird von der herausgenommenen Einrichtung entfernt.

2. Verfahren nach Anspruch 1, **dadurch gekennzeichnet, daß** das fließende Otoplastik-Material (20) durch einen durchgehenden Einführkanal (2) des Stempels (1) eingeführt wird.

3. Verfahren nach Anspruch 1 oder 2, **dadurch gekennzeichnet, daß** über den Stempel (1) eine Überschale (4) gestülpt und über die Überschale die Hülle (12) gezogen und über den Einführkanal (2) der Raum zwischen Hülle und Überschale mit fließendem Otoplastik-Material gefüllt wird.

4. Verfahren nach einem der Ansprüche 1 bis 3, **dadurch gekennzeichnet, daß** am dem Ohr abgewandten Ende (distales Ende 7) des Stempels (1) ein Stempelhalter (14) während des Verfahrensschrittes a) mit dem Stempel (1) und bei Verwendung einer Überschale gegebenenfalls auch mit der Überschale (4) verbunden wird, der die Hülle (12) mit Stempel (1) bzw. Stempel mit gegebenenfalls übergestülpter Überschale (4) verbindet.

5. Vorrichtung zur Durchführung des Verfahrens zur Herstellung einer Otoplastik, unter Verwendung eines Stempels und eines fließenden Otoplastik-Materials nach einem der Ansprüche 1 bis 4, **gekennzeichnet durch** dem die Außenkontur eines In-dem-Ohr-Hörgerätmoduls nachbildenden Stempel (1), der von einer verformbaren Hülle (12) umspannt ist und durch einen Einführkanal (2) zum Einführen des fließenden Otoplastik-Materials (20) zwischen Stempel und Hülle.

6. Vorrichtung nach Anspruch 5, **gekennzeichnet durch** eine Überschale (4) für den Stempel (1), wobei die Hülle (12) über die Kombination aus Stempel und Überschale gespannt ist, und durch einen durch den Stempel durchgehenden Einführkanal (2) derart, daß das Otoplastik-Material (20) zwischen Überschale und Hülle einführbar ist.

7. Vorrichtung nach Anspruch 5 oder 6, **dadurch gekennzeichnet, daß** der Stempel (1) an seinem distalen Ende (7) mit einer Entlüftung (8) für die beim Füllen der Hülle (12) entweichende Luft versehen ist.

8. Vorrichtung nach Anspruch 7, **dadurch gekennzeichnet, daß** in einer Entlüftungsplatte (8) und einem Stempelhalter (14), z.B. mit Stiel (18), eine Entlüftungsöffnung (9, 11) mit Austritt (19) nach außen, z.B. durch den Stempelhalter hindurch, angeordnet ist, durch die die verbleibende Luft zwischen der Hülle (12) und Überschale (4) bei der Zufuhr des fließenden Otoplastik-Materials (20) verdrängt wird und daß die Hülle zwischen Stempelhalter und Entlüftungsplatte eingeklemmt ist.

9. Vorrichtung nach Anspruch 8, **dadurch gekennzeichnet, daß** der Stempelhalter (14) und gegebenenfalls auch die Entlüftungsplatte (8) und/oder der Stempel (1) aus durchsichtigem Material, z.B. Acryl, gefertigt sind und daß das Otoplastik-Material (20) einen Fotoinitiator enthält, der den Härteprozeß einleitet, wenn das Material vom Stempelhalter her Licht ausgesetzt wird.

10. Verfahren nach Anspruch 1, **dadurch gekennzeichnet, daß** über den Stempel (1.1) eine mit Löchern (22) versehene Überschale (4.1) gestülpt und über die Überschale die Hülle (12.1) gezogen und über den Einführkanal (2.1) zunächst der Raum zwischen Stempel und Überschale mit fließendem Otoplastik-Material gefüllt wird und daraufhin das Otoplastik-Material durch die Löcher (22) der Überschale in den Raum zwischen Überschale und Hülle verdrängt wird.

11. Vorrichtung zur Durchführung des Verfahrens zur Herstellung einer Otoplastik, unter Verwendung eines Stempels und eines fließenden Otoplastik-Materials nach Anspruch 10, **gekennzeichnet durch**

a) dem die Außenkontur eines In-dem-Ohr-Hörgerätmoduls nachbildenden Stempel (1.1),

b) eine mit Löchern (22) versehene Überschale (4.1) für den Stempel, und

c) eine über Stempel (1.1) und Überschale (4.1) gespannte, verformbare Hülle (12.1).

12. Vorrichtung nach Anspruch 11, **gekennzeichnet durch** eine zweite, zwischen Stempel (1.1) und Überschale (4.1) angeordnete verformbare Hülle (23) und durch ein zwischen Stempel (1.1) und zweite Hülle (23) einführbares Füll-Medium, z.B. Luft, welches beim Einführen die zweite Hülle (23) derart verformt, daß Otoplastik-Material, welches sich zwischen Stempel und Überschale befindet, durch die Löcher (22) der Überschale in den Raum zwischen Überschale und Hülle verdrängt wird.

13. Verfahren zur Herstellung einer Otoplastik, unter Verwendung eines Stempels (1.2) und eines fließenden Otoplastik-Materials (20.2), **gekennzeichnet durch** die folgenden Verfahrensschritte :

a) auf den die Außenkontur eines In-dem-Ohr-Hörgerätmoduls nachbildenden Stempel (1.2) wird eine verformbare, doppelwandige Hülle (12.2) gezogen,

b) die Einrichtung aus Stempel (1.2) und Hülle (12.2) wird in den Hörkanal des zu versorgenden Ohres eines Hörgeschädigten eingeführt und positioniert,

c) das fließende Otoplastik-Material (20.2) wird in die Einrichtung zwischen die Wände (12a, 12b) der Hülle (12.2) eingeführt, z.B. gepreßt, bis sich die äußere Wand (12b) der Hülle an die Form des Hörkanales des Ohres angepaßt hat, die innere Wand (12a) der Hülle an den Stempel angelegt hat und der Zwischenraum zwischen den Wänden der Hülle komplett mit Otoplastik-Material gefüllt ist,

d) nach Aushärten des Otoplastik-Materials wird die Einrichtung aus dem Ohr des Patienten herausgenommen, und

e) der Stempel (1.2) wird von der herausgenommenen Einrichtung entfernt.

14. Verfahren nach Anspruch 13, **dadurch gekennzeichnet,** daß die Hülle (12.2) zwei als Teil der Hülle ausgebildete Schläuche (15.2, 15.2') aufweist und daß das Otoplastik-Material durch den einen Schlauch (15.2) eingeführt wird und durch den anderen Schlauch (15.2') austreten kann.

15. Verfahren nach Anspruch 13 oder 14, **dadurch gekennzeichnet,** daß Luft aus der Hülle (12.2) entfernt wird, bevor das Otoplastik-Material eingeführt wird.

16. Vorrichtung zur Durchführung des Verfahrens zur Herstellung einer Otoplastik, unter Verwendung eines Stempels und eines fließenden Otoplastik-Materials nach Anspruch 13, **gekennzeichnet durch :**

a) dem die Außenkontur eines In-dem-Ohr-Hörgerätmoduls nachbildenden Stempel (1.2),

b) eine über den Stempel gespannte, verformbare und doppelwandig ausgebildete Hülle (12.2), und

c) einen Einführkanal (15.2) zum Einführen des fließenden Otoplastik-Materials (20.2) zwischen die Wände der doppelwandigen Hülle.

17. Vorrichtung nach Anspruch 16, **dadurch gekennzeichnet,** daß die innere Wand (12a) der Hülle (12.2) verdickt ist.

18. Vorrichtung nach Anspruch 16 oder 17, **dadurch gekennzeichnet,** daß der Stempel (1.2) als Schale ausgebildet ist.

19. Verfahren zur Herstellung einer Otoplastik, unter Verwendung einer Schale (4.3) und eines fließenden Otoplastik-Materials (20.3), **gekennzeichnet durch** die folgenden Verfahrensschritte :

a) auf die die Außenkontur eines In-dem-Ohr-Hörgerätmoduls nachbildende Schale (4.3) wird eine verformbare Hülle (12.3) gezogen,

b) die Einrichtung aus Schale (4.3) und Hülle (12.3) wird in den Hörkanal des zu versorgenden Ohres eines Hörgeschädigten eingeführt und positioniert,

c) das fließende Otoplastik-Material (20.3) wird in die Einrichtung über einen Einführkanal (2.3) zwischen Schale (4.3) und Hülle (12.3) eingeführt, z.B. gepreßt, bis sich die Hülle an die Form des Hörkanales des Ohres angepaßt hat und der Zwischenraum zwischen Schale und Hülle komplett mit Otoplastik-Material (20.3) gefüllt ist,

d) nach Aushärten des Otoplastik-Materials (20.3) wird die Einrichtung aus dem Ohr des Patienten herausgenommen.

20. Verfahren nach Anspruch 19, **dadurch gekennzeichnet,** daß der Einführkanal (2.3) als Schlauch (15.3) ausgebildet ist, der durch die Schale (4.3) verläuft und der mit der Schale verbunden wird, und daß das fließende Otoplastik-Material dem zu füllenden Raum unter der Hülle (12.3) über den Schlauch (15.3) zugeführt wird.

21. Vorrichtung zur Durchführung des Verfahrens zur Herstellung einer Otoplastik, unter Verwendung einer Schale und eines fließenden Otoplastik-Materials nach Anspruch 19 oder 20, **gekennzeichnet durch** die die Außenkontur eines In-dem-Ohr-Hörgerätmoduls nachbildende Schale (4.3), die von einer verformbaren Hülle (12.3) umspannt ist und durch einen Einführkanal (2.3) zum Einführen des fließenden Otoplastik-Materials (20.3) zwischen Schale und Hülle.

22. Vorrichtung nach Anspruch 21, **dadurch gekennzeichnet,** daß die Schale (4.3) einen durch die Schale durchgehenden Einführkanal (2.3) für das Otoplastik-Material (20.3) und einen an dem Ohr zugewandten Ende der Schale entfernbaren Stutzen (3.3) umfaßt.

23. Vorrichtung nach Anspruch 22, **dadurch gekennzeichnet,** daß der Einführkanal (2.3) als Schlauch (15.3) ausgebildet und der Stutzen (3.3) lösbar an der Schale (4.3) befestigt ist und daß der Stutzen mit einer Masse (6.3), z.B. aus Acrylharz, derart beschichtet ist, daß eventuell noch vorhandene lichte Weite des Einführkanals (2.3) zum Stutzen (4.3) hin abgedichtet ist.

24. Vorrichtung nach einem der Ansprüche 21 bis 23, **dadurch gekennzeichnet,** daß die Hülle (12.3) an ihrem distalen Ende (7.3') mit einer Entlüftung (15.3') für die beim Füllen der Hülle (12.3) entweichende Luft versehen ist.

25. Vorrichtung nach einem der Ansprüche 21 bis 24, **dadurch gekennzeichnet,** daß am vom zu versorgenden Ohr abgewandten Ende (distales Ende 7.3) der Schale (4.3) die Schale eine Abdeckplatte (28) umfaßt.

26. Vorrichtung nach Anspruch 25, **dadurch gekennzeichnet,** daß die Abdeckplatte (28) mit der Schale (4.3) lösbar verbunden wird.

27. Vorrichtung nach Anspruch 25, **dadurch gekennzeichnet,** daß die Abdeckplatte (28) Bestandteil der Schale (4.3) ist, wobei Abdeckplatte und Schale über Sollbruchstellen verbunden sind.

28. Vorrichtung nach einem der Ansprüche 25 bis 27, **dadurch gekennzeichnet,** daß auf der Abdeckplatte (28) eine Klemmplatte (31) zur Halterung der Hülle (12.3) befestigt ist.

29. Vorrichtung nach einem der Ansprüche 5 bis 9, 11, 12, 16 bis 18 oder 21 bis 28, **dadurch gekennzeichnet,** daß die Hülle (12 ; 12.1 ; 12.2 ; 12.3) dehnbar ist.

30. Vorrichtung nach Anspruch 29, **dadurch gekennzeichnet,** daß die Hülle (12 ; 12.1 ; 12.2 ; 12.3) aus einem Elastomer, z.B. Natur- oder synthetischem Kautschuk, mit einer Wandstärke zwischen 25 µm bis 0,2 mm besteht.

31. Vorrichtung nach einem der Ansprüche 5 bis 9, 11, 12, 16 bis 18 oder 21 bis 30, **dadurch gekennzeichnet,** daß das Otoplastik-Material (20 ; 20.1 ; 20.2 ; 20.3) ein Polymer auf Acrylbasis ist.

## Claims

1. A method for manufacturing an otoplasty, by using a die (1, 1.1) and a liquid otoplastic material (20, 20.1), characterised by the following process steps :

a) a deformable sheath (12 ; 12.1) is pulled over the die (1 ; 1.1) simulating the outer contour of an in-the-ear-hearing-aid-module,

b) the device of die (1 ; 1.1) and sheath (12 ; 12.1) is introduced into and positioned in the auditory canal of the ear to be provided for of a person with damaged hearing,

c) the liquid otoplastic material (20 ; 20.1) is introduced, e.g. forced, into the device (1, 12 ; 1.1, 12.1) by way of an inlet channel (2 ; 2.1) between the die (1 ; 1.1) and the sheath (12 ; 12.1), until the sheath has been adapted to the shape of the auditory canal of the ear and the interspace between the die and sheath is completely filled with otoplastic material (20 ; 20.1).

d) once the otoplastic material (20 ; 20.1) has hardened, the device is taken from the ear of the patient, and

e) the die (1 ; 1.1) is removed from the extracted device (1, 12).

2. A method according to claim 1, characterised in that the liquid otoplastic material (20) is introduced through a through-passing inlet channel (2) of the die (1).

3. A method according to claim 1 or 2, characterised in that a cover shell (4) is put over the die (1), and the sheath (12) is pulled over the cover shell and by way of the inlet channel (2) the space between the sheath and cover shell is filled with liquid otoplastic material.

4. A method according to one of claims 1 to 3, characterised in that on the end (distal end 7) of the die (1) a die holder (14) is connected, during stage a) of the method, to the die (1), and when using a cover shell is also connected if necessary to the cover shell (4) which connects the sheath (12) to the die (1) or the die with the slipped-on cover shell (4) if necessary.

5. A device for carrying out the method for manufacturing an otoplasty, by using a die and a liquid otoplastic material, according to one of claims 1 to 4, characterised by the die (1) simulating the outer contour of an in-the-ear-hearing-aid-module, which die is encompassed by a deformable sheath (12), and by an inlet channel (2) for introducing liquid otoplastic material (20) between the die and sheath.

6. A device according to claim 5, characterised by a cover shell (4) for the die (1), wherein the sheath (12) is stretched over the combination of die and cover shell, and by an inlet channel (2) passing through the die in such a way that the otoplastic material (20) is able to be introduced between cover shell and sheath.

7. A device according to one of claims 5 or 6, characterised in that the die (1) is equipped on its distal end (7) with ventilation means (8) for the air escaping when filling the sheath (12).

8. A device according to claim 7, characterised in that arranged in a ventilation plate (8) and a die holder (14), e.g. with a handle (18), there is a ventilation opening (9, 11) with an outlet (19) leading outwards, e.g. through the die holder, through which the air remaining between sheath (12) and cover shell (4) is displaced, when supplying the liquid otoplastic material (20), and in that the sheath is clamped between the die holder and ventilation plate.

9. A device according to claim 8, characterised in that the die holder (14) and also if necessary the ventilation plate (8) and/or die (1) are made of transparent material, eg. acrylic, and in that the otoplastic material (20) contains a photoinitiator which initiates the hardening process, if the material is exposed to light from the die holder.

10. A method according to claim 1, characterised in that a cover shell (4.1) provided with holes (22) is put over the die (1.1) and the sheath (12.1) is pulled over the cover shell and by way of the inlet channel (2.1) the space between the die and cover shell is then filled with liquid otoplastic material, and then the otoplastic material is displaced through the holes (22) of the cover shell into the space between the cover shell and sheath.

11. A device for carrying out the method for manufacturing an otoplasty, by using a die and a liquid otoplastic material, characterised by

a) the die (1.1) simulating the outer contour of an in-the-ear-hearing-aid-module,

b) a cover shell (4.1) for the die, provided with holes (22),

c) a deformable sheath (12.1) stretched over the die (1.1) and the cover shell (4.1).

12. A device according to claim 11, characterised by a second, deformable sheath (23), arranged between the die (1.1) and the cover shell (4.1) and by a filling agent, e.g. air, able to be introduced between a die (1.1) and a second sheath (23), which agent, when introduced, deforms the second sheath (23), such that otoplastic material, which is located between the die and the cover shell, is displaced through the holes (22) of the cover shell into the space between the cover shell and sheath.

13. A method for manufacturing an otoplasty by using a die (1.2) and a liquid otoplastic material (20.2), characterised by the following process steps :

a) a deformable, double-walled sheath (12.2) is pulled over the die (1.2) simulating the outer contour of an in-the-ear-hearing-aid-module,

b) the device of die (1.2) and sheath (12.2) is introduced into and positioned in the auditory canal of the ear to be provided for of the person with damaged hearing,

c) the liquid otoplastic material (20.2) is introduced, e.g. forced, into the device between the walls (12a, 12b) of the sheath (12.2), until the outer wall (12b) of the sheath is adapted to the shape of the auditory canal of the ear, the inner wall (12a) of the sheath is laid on the die and the interspace between the walls of the sheath is completely filled with otoplastic material,

d) once the otoplastic material has hardened the device is taken from the ear of the patient, and

e) the die (1.2) is removed from the extracted device.

14. A method according to claim 13, characterised in that the sheath (12.2) has two tubes (15.2, 15.2') formed as part of the sheath, and in that the otoplastic material can be introduced through one tube (15.2) and can exit through the other tube (15.2').

15. A method according to claim 13 or 14, characterised in that air is removed from the sheath (12.2) before the otoplastic material is introduced.

16. A device for carrying out the method for manufacturing an otoplasty, by using a die and a liquid otoplastic material, according to claim 13, characterised by :

a) the die (1.2) simulating the outer contour of an in-the-ear-hearing-aid-module,

b) a deformable and double-walled sheath (12.2) stretched over the die, and

c) an inlet channel (15.2) for introduction of the liquid otoplastic material (20.2) between the walls of the double-walled sheath.

17. A device according to claim 16, characterised in that the inner wall (12a) of the sheath (12.2) is thickened.

18. A device according to claim 16 or 17, characterised in that the die (1.2) is formed as a shell.

19. A method for manufacturing an otoplasty, by using a die and a liquid otoplastic material, (20.3), characterised by the following process steps :

a) a deformable sheath (12.3) is pulled over the shell (4.3), simulating the outer contour of the in-the-ear-hearing-aid-module,

b) the device of shell (4.3) and sheath (12.3) is introduced into and positioned in the auditory canal of the ear to be provided for of a person with damaged hearing,

c) the liquid otoplastic material (20.3) is introduced, e.g. forced, into the device by way of the inlet channel (2.3) between shell (4.3) and sheath (12.3), until the sheath has been adapted to the shape of the auditory canal of the ear and the interspace between the shell and sheath is completely filled with otoplastic material (20.3),

d) once the otoplastic material (20.3) has hardened the device is taken from the ear of the patient.

20. A method according to claim 19, characterised in that the inlet channel (2.3) is formed as a tube (15.3), which extends through the shell (4.3) and which is connected to the shell, and in that the liquid otoplastic material is supplied to the space to be filled under the shell (12.3) and over the tube (15.3).

21. A device for carrying out the method for manufacturing an otoplasty, by using a shell and a liquid otoplastic material according to claim 19 or 20, characterised by the shell (4.3) simulating the outer contour of an in-the-ear-hearing-aid-module, which is encompassed by a deformable sheath (12.3), and by an inlet channel (2.3) for introducing the liquid otoplastic material (20.3) between the shell and sheath.

22. A device according to claim 21, characterised in that the shell (4.3) comprises an inlet channel (2.3) passing through the shell for the otoplastic material (20.3) and a removable connecting piece (3.3) on the end of the shell facing the ear.

23. A device according to claim 22, characterised in that the inlet channel (2.3) is formed as a tube (15.3) and the connecting piece (3.3) is secured in a releasable manner on the shell (4.3) and in that the connecting piece is coated with a substance (6.3), e.g. acrylic resin, such that the possibly still present lumen of the inlet channel (2.3) to the connecting piece (4.3) is sealed.

24. A device according to one of claims 21 to 23, characterised in that the sheath (12.3) on its distal end (7.3') is provided with ventilation means (15.3') for the air escaping when filling the sheath (12.3).

25. A device according to one of claims 21 to 24, characterised in that on the end (distal end 7.3) of the shell (4.3), facing away from the ear to be provided for, the shell comprises a covering plate (28).

26. A device according to claim 25, characterised in that the cover plate (28) is connected in a releasable manner to the shell (4.3).

27. A device according to claim 25, characterised in that the cover plate (28) is a component part of the shell (4.3), wherein the cover plate and shell are connected by way of breaking points.

28. A device according to one of claims 25 to 27, characterised in that on the cover plate (28) there is secured a clamping plate (31) for holding the sheath (12.3).

29. A device according to one of claims 5 to 9, 11, 12, 16 to 18 or 21 to 28, characterised in that the sheath (12 ; 12.1 ; 12.2 ; 12.3) is flexible.

30. A device according to claim 29, characterised in that the sheath (12 ; 12.1 ; 12.2 ; 12.3) consists of an elastomer, e.g. natural or synthetic rubber, with a wall thickness of between 25 μm to 0.2mm.

31. A device according to one of claims 5 to 9, 11, 12, 16 to 18 or 21 to 30, characterised in that the otoplastic material (20 ; 20.1 ; 20.2 ; 20.3) is an acrylic based polymer.

## Revendications

1. Procédé pour fabriquer une prothèse auriculaire moyennant l'utilisation d'un poinçon (1, 1.1) et d'un matériau fluide (20, 20.1) destiné à former la prothèse, caractérisé par les étapes opératoires suivantes :
   a) on applique une enveloppe déformable (12 ; 12.1) sur le poinçon (1 ; 1.1) qui stimule le contour extérieur d'un module d'appareil de correction auditive destiné à être placé dans l'oreille,
   b) on introduit et on positionne le dispositif formé du poinçon (1 ; 1.1) et de l'enveloppe (12 ; 12.1) dans le conduit auditif de l'oreille, devant être assistée, d'un malentendant,
   c) on introduit, par exemple en le refoulant, le matériau fluide (20 ; 20.1) de la prothèse dans le dispositif (1,12 ; 1.1, 12.1), par l'intermédiaire d'un canal d'introduction (2 ; 2.1) entre le poinçon (1 ; 1.1) et l'enveloppe (12 ; 12.1), jusqu'à ce que l'enveloppe se soit adaptée à la forme du conduit auditif de l'oreille et que le matériau (20 ; 20.1) de la prothèse auriculaire ait complètement rempli l'espace présent entre le poinçon et l'enveloppe,
   d) après durcissement du matériau (20 ; 20.1) de la prothèse auditive, on retire le dispositif de l'oreille du patient, et
   e) on enlève le poinçon (1 ; 1.1) du dispositif retiré.

2. Procédé suivant la revendication 1, caractérisé par le fait qu'on introduit le matériau fluide (20) de prothèse auriculaire dans un conduit continu d'introduction (2) du poinçon (1).

3. Procédé selon la revendication 1 ou 2, caractérisé par le fait qu'on applique, par-dessus le poinçon (1), une coque enveloppante (4) et qu'on emmanche, par-dessus la coque enveloppante, l'enveloppe (12) et qu'on remplit, au moyen du canal d'introduction (2) l'espace présent entre l'enveloppe et la coque enveloppante, avec le matériau fluide de la prothèse.

4. Procédé suivant l'une des revendications 1 à 3, caractérisé par le fait qu'au niveau de l'extrémité tournée à l'opposé de l'oreille (extrémité distante 7) du poinçon (1), on raccorde un porte-poinçon (14) au poinçon (1), pendant l'étape opératoire (f), et, dans le cas d'utilisation d'une coque enveloppante, éventuellement également à cette coque enveloppante (4), le porte-poinçon raccordant l'enveloppe (12) au poinçon (1) ou le poinçon à la coque enveloppante (4) éventuellement emmanchée par-dessus le poinçon.

5. Dispositif pour la mise en oeuvre du procédé pour la fabrication d'une prothèse auriculaire, moyennant l'utilisation d'un poinçon et d'un matériau fluide constituant la prothèse, suivant l'une des revendications 1 à 4, caractérisé par le fait que le poinçon (1), qui simule le contour d'un module d'appareil de correction auditive destiné à être placé dans l'oreille, est entouré par une enveloppe déformable (12) et qu'il est prévu un canal d'introduction (2) pour l'introduction du matériau fluide (20) de la prothèse auriculaire entre le poinçon et l'enveloppe.

6. Dispositif suivant la revendication 5, caractérisé par une coque enveloppante (4) pour le poinçon (1), l'enveloppe (12) étant tendue sur l'ensemble formé du poinçon et de la coque enveloppante, et par un canal d'introduction (2) traversant continûment le poinçon, de sorte que le matériau (20) de la prothèse auriculaire peut être introduit entre la coque enveloppante et l'enveloppe.

7. Dispositif suivant la revendication 5 ou 6, caractérisé par le fait que le poinçon (1) comporte, sur son extrémité distale (7), une ouverture d'aération (8) pour l'air qui s'échappe lors du remplissage de l'enveloppe (12).

8. Dispositif suivant la revendication 7, caractérisé par le fait que dans une plaque d'aération (8) et dans un porte-poinçon (14), par exemple équipé d'une tige (18), est disposée une ouverture d'aération (9, 11) comportant une sortie (19) débouchant à l'extérieur, par exemple à travers le porte-poinçon, et par laquelle l'air subsistant entre l'enveloppe (12) et la coque enveloppante (4) est refoulé lors de l'envoi du matériau fluide (20) de la prothèse auriculaire, et que l'enveloppe est coincée par serrage entre le porte-poinçon et la plaque d'aération.

9. Dispositif suivant la revendication 8, caractérisé par le fait que le porte-poinçon (14) et éventuellement également la plaque d'aération (8) et/ou le poinçon (1) sont réalisés en un matériau transparent, par exemple de l'acryl, et que le matériau (20) de la prothèse auriculaire contient un photo-initiateur qui déclenche le processus de durcissement lorsque le matériau est soumis à une lumière à partir du porte-poinçon.

10. Procédé suivant la revendication 1, caractérisé par le fait qu'on applique sur le poinçon (1.1) une coque enveloppante (4.1) comportant des trous (22) et qu'on applique l'enveloppe (12. 1) par-dessus la coque enveloppante et qu'on remplit, au moyen du canal d'introduction (2. 1), tout d'abord l'espace compris entre le poinçon et la coque enveloppante, avec un matériau fluide constitutif de la prothèse et qu'ensuite on refoule le matériau de la prothèse auriculaire à travers les trous (22) de la coque enveloppante, dans l'espace compris entre cette coque enveloppante et l'enveloppe.

11. Dispositif pour la mise en oeuvre du procédé pour fabriquer une prothèse auriculaire, moyennant l'utilisation d'un poinçon et d'un matériau fluide de la prothèse, suivant la revendication 10, caractérisé par

    a) le poinçon (1.1) simulant le contour extérieur d'un module d'appareil de correction auditive destiné à être placé dans l'oreille,

    b) une coque enveloppante (4.1), comportant des trous (22), pour le poinçon, et

    c) une enveloppe déformable (12.1) tendue sur le poinçon (1.1) et sur la coque enveloppante (4.1).

12. Dispositif suivant la revendication 11, caractérisé par une seconde enveloppe déformable (23), disposée entre le poinçon (1.1) et la coque enveloppante (4.1), et par un fluide de remplissage, par exemple de l'air, qui peut être introduit entre le poinçon (1.1) et la seconde enveloppe (23) et qui, lors de son introduction, déforme la seconde enveloppe (23) de telle sorte que le matériau de la prothèse auriculaire, qui est situé entre le poinçon et la coque enveloppante, est refoulé par les trous (22) de la coque enveloppante, dans l'espace compris entre cette dernière et l'enveloppe.

13. Procédé pour fabriquer une prothèse auriculaire, moyennant l'utilisation d'un poinçon (1.2) et d'un matériau fluide (20.2) de la prothèse auriculaire, caractérisé par les étapes opératoires suivantes :

    a) on applique une enveloppe déformable à double paroi (12.2) sur le poinçon (1.2) qui simule le contour extérieur d'un module d'appareil de correction auditive destiné à être placé dans l'oreille,

    b) on introduit et on positionne le dispositif formé du poinçon (1.2) et de l'enveloppe (12.2) dans le canal auditif de l'oreille, devant être assistée, d'un malentendant,

    c) on introduit, par exemple par refoulement, le matériau fluide (20.2) de la prothèse dans le dispositif entre les parois (12a,12b) de l'enveloppe (12.2), jusqu'à ce que la paroi extérieure (12b) de l'enveloppe se soit adaptée à la forme du conduit auditif de l'oreille, que la paroi intérieure (12a) de l'enveloppe se soit appliquée contre le poinçon et que l'espace présent entre les parois et l'enveloppe soit complètement rempli par le matériau de la prothèse auriculaire,

    d) après le durcissement du matériau de la prothèse, on retire le dispositif de l'oreille du patient, et

    e) on dégage le poinçon (1.2) du dispositif retiré.

14. Procédé suivant la revendication 13, caractérisé par le fait que l'enveloppe (12.2) comporte deux tuyaux (15.2, 15.2') réalisés en tant que parties de l'enveloppe et qu'on introduit le matériau de la prothèse auriculaire dans un tuyau (15.2) et que ce matériau peut ressortir par l'autre tuyau (15.2').

15. Procédé suivant la revendication 13 ou 14, caractérisé par le fait qu'on élimine l'air de l'enveloppe (12.2) avant d'introduire le matériau de la prothèse auriculaire.

16. Dispositif pour la mise en oeuvre du procédé pour fabriquer une prothèse auriculaire moyennant l'utilisation d'un poinçon et d'un matériau fluide de cette prothèse suivant la revendication 13, caractérisé par :

    a) le poinçon (1.2) simulant le contour extérieur d'un module d'appareil de correction auditive destiné à être placé dans l'oreille,

    b) une enveloppe déformable (12.2), à paroi double, tendue sur le poinçon, et

    c) un canal d'introduction (15.2) permettant l'introduction du matériau fluide (20.2) de la prothèse auriculaire entre les parois de l'enveloppe à paroi double.

17. Dispositif suivant la revendication 16, caractérisé par le fait que la paroi intérieure (12a) de l'enveloppe (12.2) est épaissie.

18. Dispositif suivant la revendication 16 ou 17, caractérisé par le fait que le poinçon (1.2) est réalisé sous la forme d'une coque.

19. Procédé pour fabriquer une prothèse auriculaire moyennant l'utilisation d'une coque (4. 3) et d'un matériau fluide (20.3) de la prothèse auriculaire, caractérisé par les étapes opératoires suivantes :

    a) on applique une enveloppe déformable (12.3) sur la coque (4.3) qui simule le contour extérieur du module d'appareil de correction auditive destiné à être placé dans l'oreille,

b) on introduit et on positionne le dispositif formé de la coque (4.3) et de l'enveloppe (12.3) dans le conduit auditif de l'oreille, qui doit être assistée, d'un malentendant,

c) on introduit, par exemple par refoulement, le matériau fluide (20.3) de la prothèse auriculaire dans le dispositif par l'intermédiaire d'un canal d'introduction (2.3), entre la coque (4.3) et l'enveloppe (12.3), jusqu'à ce que l'enveloppe se soit adaptée à la forme du conduit auditif de l'oreille et que l'espace compris entre la coque et l'enveloppe soit complètement rempli par le matériau (20.3) de la prothèse auriculaire,

d) après durcissement du matériau (20.3) de la prothèse auriculaire, on retire le dispositif hors de l'oreille du patient.

20. Procédé suivant la revendication 19, caractérisé par le fait que le canal d'introduction (2.3) est réalisé sous la forme d'un tuyau (15.3), qui traverse la coque (4.3) et est raccordé à cette dernière, et qu'on envoie le matériau fluide de la prothèse auriculaire à l'espace devant être rempli au-dessous de l'enveloppe (12.3), par l'intermédiaire du tuyau (15.3).

21. Dispositif pour la mise en oeuvre du procédé pour fabriquer une prothèse auriculaire moyennant l'utilisation d'une coque et d'une matière fluide constituant la prothèse, suivant la revendication 19 ou 20, caractérisé par le fait que le contour extérieur de la coque (4.3), qui simule un module d'appareil de correction auditive destiné à être placé dans l'oreille, est entouré par une enveloppe déformable (12.3) et que le canal d'introduction (2.3) sert à introduire le matériau fluide (20.3) de la prothèse auditive entre la coque et l'enveloppe.

22. Dispositif suivant la revendication 21, caractérisé par le fait que la coque (4.3) comporte un canal (2.3), qui traverse la coque et est utilisé pour introduire le matériau (20.3) de la prothèse auriculaire, et une tubulure (3.3), qui peut être retirée au niveau de l'extrémité de la coque, tournée vers l'oreille.

23. Dispositif suivant la revendication 22, caractérisé par le fait que le canal d'introduction (2.3) est raccordé sous la forme d'un tuyau (15.3) et que la tubulure (3.3) est fixée de façon amovible à la coque (4.3) et que la tubulure est enduite d'une masse (6.3), par exemple une résine acrylique, de telle sorte qu'éventuellement un passage encore libre du canal d'introduction (2.3) en direction de la tubulure (4.3) est obturé de façon étanche.

24. Dispositif suivant l'une des revendications 21 à 23, caractérisé par le fait que l'enveloppe (12.3) comporte, au niveau de son extrémité distale (7.3'), une ouverture d'aération (15.3') pour l'air qui s'échappe lors du remplissage de l'enveloppe (12.3).

25. Dispositif suivant l'une des revendications 21 à 24, caractérisé par le fait que la coque comporte une plaque de fermeture (28) au niveau de son extrémité (extrémité distale (7.3), tournée à l'opposé de l'oreille devant être assistée.

26. Dispositif suivant la revendication 25, caractérisé par le fait que la plaque de fermeture (28) est raccordée de façon amovible à la coque (4.3).

27. Dispositif suivant la revendication 25, caractérisé par le fait que la plaque de fermeture (28) fait partie de la coque (4.3), la plaque de fermeture et la coque étant raccordées par l'intermédiaire de zones de rupture de consigne.

28. Dispositif suivant l'une des revendications 25 à 27, caractérisé par le fait qu'une plaque de serrage (31) servant à retenir l'enveloppe (2.3) est fixée à la plaque de fermeture (28).

29. Dispositif suivant l'une des revendications 5 à 9, 11, 12, 16 à 18 ou 21 à 28, caractérisé par le fait que l'enveloppe (12 ; 12.1 ; 12.2 ; 12.3) est dilatable.

30. Dispositif suivant la revendication 29, caractérisé par le fait que l'enveloppe (12 ; 12.1 ; 12.3) est réalisée en un élastomère, par exemple du caoutchouc naturel ou synthétique, possédant une épaisseur de paroi comprise entre 25 µm et 0,2 mm.

31. Dispositif suivant l'une des revendications 5 à 9, 11, 12, 16 à 18 ou 21 à 3O, caractérisé par le fait que le matériau (20 ; 20.1 ; 20.2 ; 20.3) de la prothèse auriculaire est un polymère à base acrylique.

FIG 1

FIG 2

EP 0 289 750 B1

FIG 3

FIG 4

FIG 5

FIG 6

FIG 7

FIG 8

FIG 9

EP 0 289 750 B1